# EUROPEAN PATENT SPECIFICATION

(11) **EP 2 092 995 B1**
(45) Date of publication and mention of the grant of the patent: **08.06.2011**
(21) Application number: 09360014.6
(22) Date of filing: 16.02.2009
(51) Int. Cl.: B21K 1/56, F16B 5/02, F16B 25/10

(54) **Self-drilling screw and method of making the same**
Selbstbohrende Schraube und Herstellungsverfahren davon
Vis auto-perceuse et son procédé de fabrication

(30) Priority: 25.02.2008 US 36854
(43) Date of publication of application: 26.08.2009
(73) Proprietor: Sun Through Industrial Co. Ltd., Changhua Hsien, Taiwan 50846 (TW)
(72) Inventor: Wang, Hsi-Yuan, Changhua Hsien Taiwan 50849 (TW); Wang, Chih-Chang, Changhua Hsien Taiwan 50847 (TW)
(74) Representative: Jannig, Peter

(56) References cited:
- EP-A1- 1 180 606
- EP-A1- 1 450 054
- GB-A- 1 120 593
- GB-A- 1 219 237
- US-A- 3 710 676
- US-A1- 2008 124 188

## Description

### BACKGROUND OF THE INVENTION

### 1. Field of the Invention

This invention relates to a screw, more particularly to a self-drilling screw and a method of making the same.

### 2. Description of the Related Art

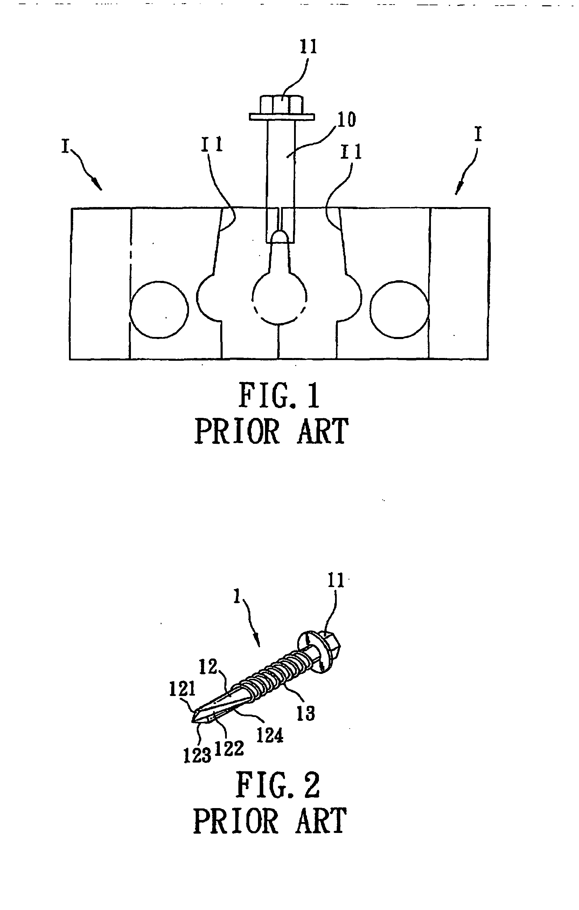

Referring to Figs. 1 and 2, a conventional self-drilling screw 1 is produced by first forging a top end of a cylindrical blank 10 to form a head portion 11, after which a bottom end of the blank 10 is disposed between a pair of matching dies (I) to undergo another forging process. Through forming cavities (11) of the dies (I), the bottom end of the blank 10 is forged to form a drilling tip 12 having two tapered end faces 121, two symmetrical and inclining flutes 122, a chisel edge 123, and a cutting edge 124. Finally, an intermediate portion of the blank 10 is thread-rolled to form an externally threaded section 13. During a screwing operation, through the chisel edge 123 and the cutting edge 124 of the self-drilling screw 1 that initially intrude into a workpiece, the externally threaded section 13 of the screw 1 is gradually guided into the workpiece so as to be fastened to the same. Shavings produced during the screwing operation are discharged through the flutes 122.

Because the two flutes 122 are substantially straight though slanting, the drilling speed of the screw 1 is slow, and the discharging of the shavings is not smooth, especially when the workpiece is bored deeply. Further, since the shavings cannot be discharged smoothly, high temperature heat will be produced at the drilling tip 12, thereby causing the drilling tip 12 to become dull. Moreover, the drilling tip 12 can be stuck in the workpiece and become ruptured.

GB 1 120 593 A, in the name of Textron Inc., discloses a self-drilling and self-tapping screw produced by placing a blank in an extrusion die, applying pressure by a punch to extrude a portion and thus form a flat portion, transferring the blank to a heading die, and forming a head by punching, machining cutting edges on portion, and then rolling a screw thread on the shank. In this document, the drill point may be helically twisted when being operated on in the heading die, the screw head may have an integral washer, and if the drill point is to have a larger diameter than that of the screw threads, the end is upset by a tool, and then machined along the dotted lines.

US 2008/124188 A1, in the name of Chang Chen-Chih, deals with a concrete screw comprising a threaded portion with threads spirally disposed thereon and a helical conveying portion. In particular, the outer diameter of the threads is greater than the diameter of the helical conveying portion, in which two angled surfaces formed on the end thereof. Two flutes are respectively defined between the angled surfaces, a cutting edge is formed on the intersection of one side of each of angled surfaces and two flutes. While screwing, the screw can directly and facilely be firmly screwed into the wall, thus greatly saving the screwing time and increasing the screw efficiency.

EP 1 450 054 A1, in the name of Wuerth Adolf Gmbh & Co, concerns a self-tapping screw comprises a screw head, a screw shaft with a thread, and a drill tip used as a drill, especially a twist drill, and made of super-speed steel and connected to the screw shaft. According to preferred features, the screw shaft is made of case-hardened steel. The drill tip is welded to the shaft, especially by friction welding.

### SUMMARY OF THE INVENTION

Therefore, the object of the present invention is to provide a self-drilling screw and a method of making the same, in which the self-drilling screw allows for smooth boring and discharging operations.

According to one aspect of this invention, a method of making a self-drilling screw comprises the steps of: (a) forging a rod-shaped blank to form a head portion, a drilling portion opposite to the head portion, and a shank portion between the head and drilling portions, the drilling portion having two flutes formed respectively on two opposite sides of the drilling portion, and two lands each formed between the flutes; (b) twisting the drilling portion by clamping the shank portion and an end section of the drilling portion, and by rotating the shank portion and the end section relative to each other, so that the flutes and the lands are twisted to extend helically; and (c) forming an externally threaded section on the shank portion of the blank.

According to another aspect of this invention, a self-drilling screw comprises a headportion, a shankportion having an externally threaded section, and a drilling portion opposite to the head portion. The drilling portion has a main section and a tip section, two flutes extending helically through the main and tip sections, and two lands extending helically between the flutes. Each of the lands has a tapered face extending in the tip section and between the flutes, and a drilling edge formed on one end of the tapered face.

### BRIEF DESCRIPTION OF THE DRAWINGS

Other features and advantages of the present invention will become apparent in the following detailed description of the preferred embodiment of the invention, with reference to the accompanying drawings, in which:
Fig. 1 is a schematic view of a method of making a conventional self-drilling screw;
Fig. 2 is a perspective view of the conventional self-drilling screw produced according to the method of Fig. 1;
Fig. 3 is a perspective view of a self-drilling screw according to the preferred embodiment of the present invention;
Fig. 4 is a schematic bottom view of the preferred embodiment;
Fig. 5 is a sectional view of the preferred embodiment;
Fig. 6 is a flow chart, illustrating the steps involved in making the self-drilling screw according to the preferred embodiment of the present invention;
Fig. 7 is a perspective view of a cylindrical blank after forging;
Fig. 8 illustrates the blank being clamped by two clamping tools;
Fig. 9 illustrates how a drilling portion of the blank is formed;
Fig. 10 illustrates the self-drilling screw of the present invention in a state of use; and
Fig. 11 is a sectional view, illustrating how shavings are discharged through second flutes of the self-drilling screw of the present invention.

### DETAILED DESCRIPTION OF THE PREFERRED EMBODIMENT

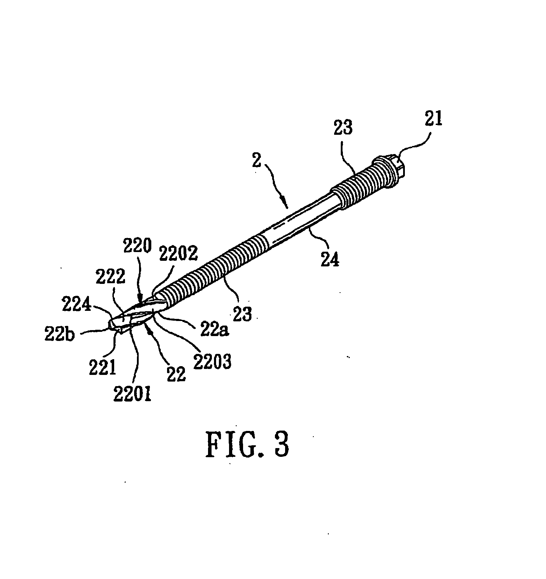

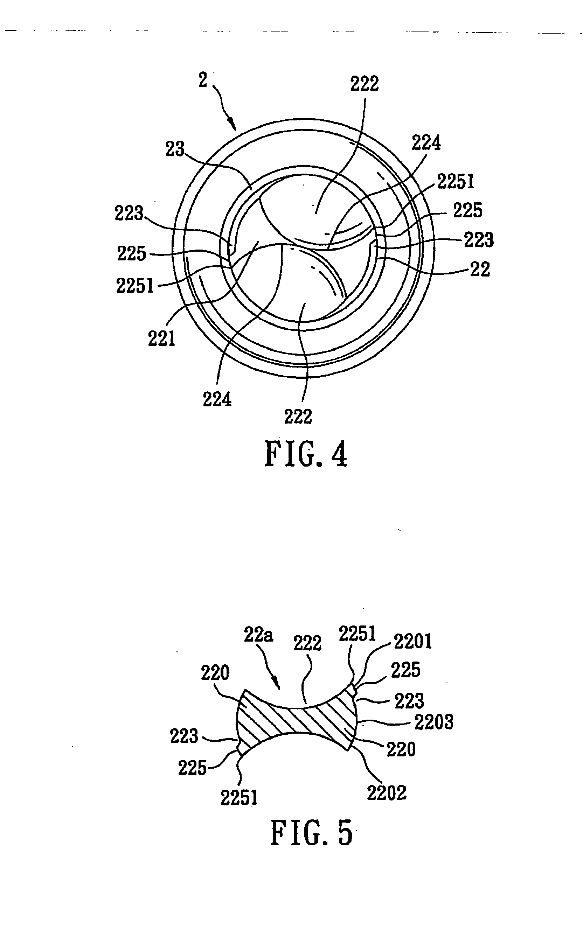

Referring to Figs. 3 to 5, a self-drilling screw 2 according to the preferred embodiment of the present invention is shown to comprise a head portion 21, a drilling portion 22 opposite to the head portion 21, and a shank portion 24 between the head and drilling portions 21, 22 and having two spaced-apart externally threaded sections 23.

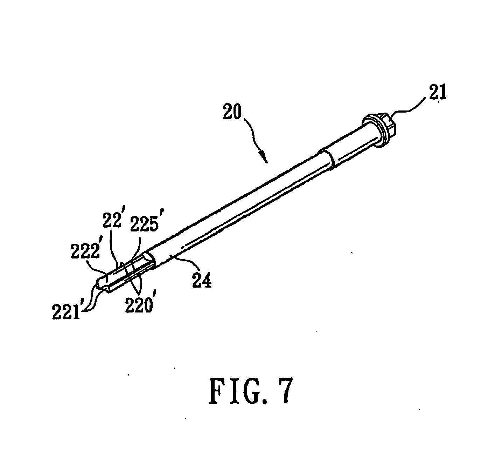

Referring to Fig. 7, there is shown a blank 20 for forming the screw 2 which has a preform 22' for the drilling portion 22. The preform 22' has two opposite tapered faces 221', two first flutes 222' (only one is visible), two lands 220' extending between the two first flutes 222', and two protruding lips 225' (only one is visible) formed respectively on the two lands 220' adjacent to the respective first flutes 222'.

The drilling portion 22 is formed by twisting the preform 22' to thereby result in a main section (22a), a tip section (22b), two first flutes 222 extending helically through the main and tip sections (22a, 22b), and two lands 220 extending helically between the first flutes 222. Each of the first flutes 222 turns helically by an angle approximately equal to 180 degrees, but is not limited thereto.

Each of the lands 220 has a tapered face 221 extending in the tip section (22b) and between the first flutes 222, a drilling edge 224 formed on one end of the tapered face 221, and a land face 2203 extending helically in the main section (22a) between first and second ends 2201, 2202. The first end 2201 is adjacent to one of the first flutes 222, and the second end 2202 is spaced apart angularly from the first end 2201, and is adjacent to the other one of the first flutes 222. Each land face 2203 is recessed to form a second flute 223 that extends helically in proximity to the first end 2201, and a lip 225 that projects helically between the second flute 223 and the first flute 222. The lip 225 is immediately adjacent to the second flute 223. The land face 2203 is stepped between the lip 225 and the second flute 223. The lip 225 has a cutting edge 2251 extending helically on the first end 2201 that is opposite to the second flute 223.

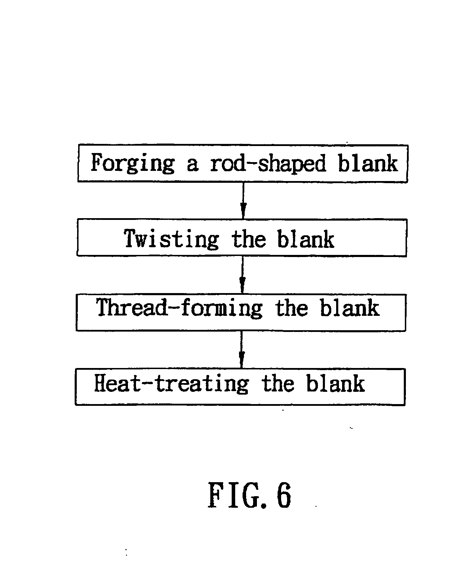

Referring to Fig. 6, the method of making the self-drilling screw 2 of the present invention is shown to comprise the steps of forging, twisting, thread-forming, And heating.

Referring back to Fig. 7, a top end of the cylindrical blank 20 is forged to form the head portion 21, and a bottom end thereof is disposed between a pair of matching dies, which are similar to those shown in Figure 1, to undergo another forging process to form the preform 22'.

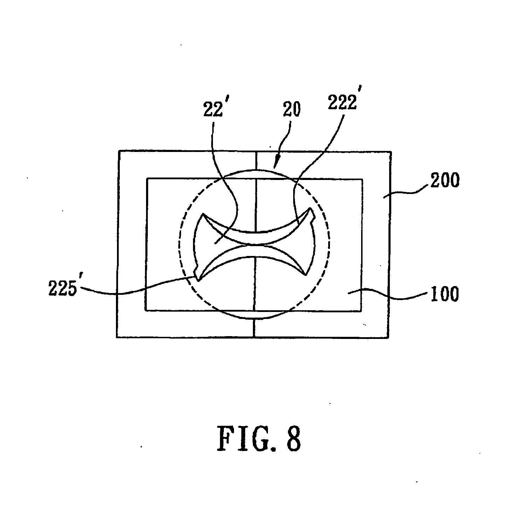

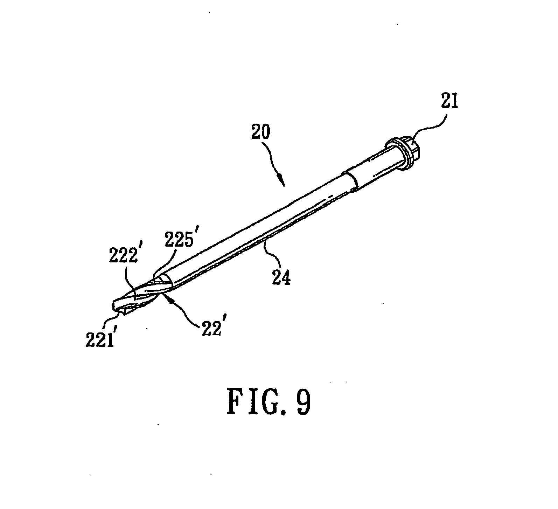

After the forging process, with reference to Figs. 8 and 9, the shank portion 24 of the blank 20 and an end section of the preform 22' are clamped fixedly by two clamping tools 100 and 200, after which one of the clamping tools 100 or 200 is rotated by about 180° (or may be rotated by another angle) so as to twist and rotate the shank portion 24 of the blank 20 and an end section of the preform 22' relative to each other. As such, the first flutes 222', the lands 220', and the lips 225' of the preform 22' are twisted to extend helically.

With reference to Fig. 9, in combination with Fig. 3, the shank portion 24 of the blank 20 is then formed with two spaced-apart externally threaded sections 23 by using thread-rolling dies (not shown) to perform a thread-rolling process. Afterwards, the blank 20 is heat-treated by subjecting the blank 20 to a suitable temperature for hardening the same. The self-drilling screw 2 of the present invention is thus produced. The method of the present invention may be conducted automatically and continuously to achieve a high rate of mass production of the screw 2.

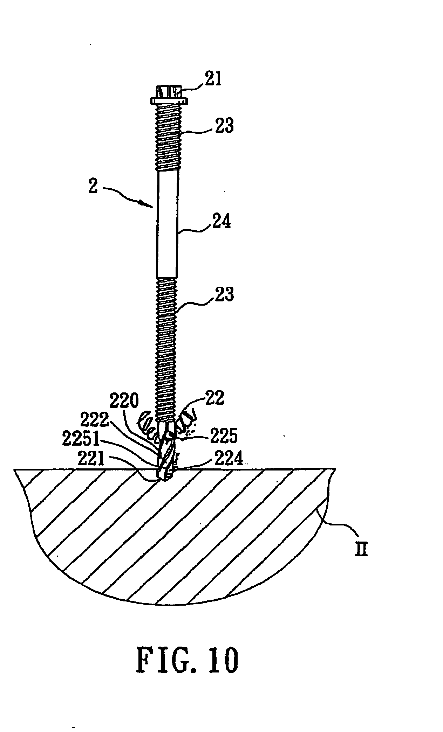

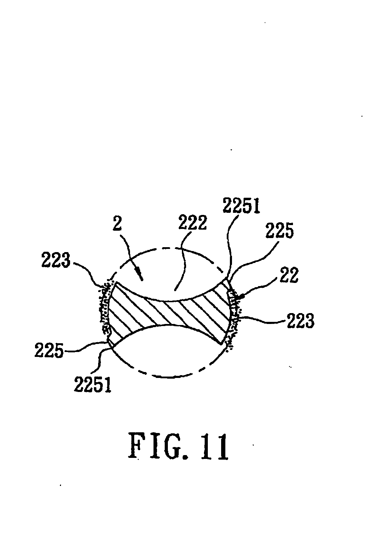

Referring to Figs. 10 and 11, during a screwing operation of the self-drilling screw 2, the drilling edge 224 and the cutting edge 2251 of the screw 2 first bore into a workpiece (II), after which one of the externally threaded sections 23 of the screw 2 is guided threadedly and gradually into the workpiece (II). Simultaneously, shavings produced during the screwing operation are moved upwardly along the drilling portion 22 through the helically extending first flutes 222, and are discharged through the first flutes 222. Further, through the presence of the second flutes 223 in the lands 220, excessive boring and overheating of the drilling portion 22 due to sticking of the shavings may be prevented. As such, the present invention may achieve stable positioning effects.

From the aforementioned description, the advantages of the present invention may be summarized as follows:
1. Since the drilling portion 22 of the self-drilling screw 2 has the helically extending first flutes 222 and the helically extending cutting edges 2251, cutting and discharging operations during the screwing operation of the self-drilling screw 2 are smooth, and the resistance to cutting is minimized. Hence, the fastening operation of the screw 2 is fast to thereby enhance the process efficiency of the screw 2.
2. Since the first flutes 222 are helical, the discharging function of the same is good, so that rupture of the drilling portion 22 due to unsmooth discharging of the shavings can be overcome.
3. The first flutes 222 are formed helically by rotating one of the clamping tools 100, 200, so that processing of the first flutes 222 is simple. Also, manufacturing costs are minimized, ultimately increasing the competitiveness of the self-drilling screw 2.

While the present invention has been described in connection with what is considered the most practical and preferred embodiment, it is understood that this invention is not limited to the disclosed embodiment but is intended to cover various arrangements included within the scope of the claims.

## Claims

1. A method of making a self-drilling screw (2), comprising:
(a) forging a rod-shaped blank (20) to form a head portion (21), a drilling portion (22) opposite to the head portion (21), and a shank portion (24) between the head portion (21) and the drilling portion (22), the drilling portion (22) having two flutes (222') formed respectively on two opposite sides of the drilling portion (22), and two lands (220') each formed between the flutes (222');
(b) twisting the drilling portion (22) by clamping the shank portion (24) and an end section of the drilling portion (22), and by rotating the shank portion (24) and the end section relative to each other, so that the flutes (222') and the lands (220') are twisted to extend helically; and
(c) forming an externally threaded section (23) on the shank portion (24) of the blank (20),
**characterised in that**, in step (b), the shank portion (24) and the end section are rotated relative to each other by an angle of substantially 180 degrees.

2. The method of Claim 1, further comprising the step of heat treating the blank (20) after step (c).

3. A self-drilling screw (2) comprising:
• a head portion (21);
• a shank portion (24) having an externally threaded section (23); and
• a drilling portion (22) opposite to said head portion (21), said drilling portion (22) having a main section (22a) and a tip section (22b), two first flutes (222) extending helically through said main and tip sections (22a, 22b), and two lands (220) extending helically between said first flutes (222), each of said lands (220) having a tapered face (221) extending in said tip section (22b) and between said first flutes (222), and a drilling edge (224) formed on one end of said tapered face (221),
**characterised in that**, each of said first flutes (222) turns helically by an angle approximately equal to 180 degrees.

4. The self-drilling screw (2) of Claim 3, wherein each of said lands (220) further includes a land face (2203) extending helically in said main section (22a) between said first flutes (222) and having a first end (2201) which is adjacent to one of said first flutes (222), and a second end (2202) which is spaced apart angularly from said first end (2201) and which is adjacent to the other one of said first flutes (222), said land face (2203) being recessed to form a second flute (223) that extends helically in proximity to said first end (2201), and a lip (225) that projects helically between said second flute (223) and one of said first flutes (222), said lip (225) being immediately adjacent to said second flute (223), said land face (2203) being stepped between said lip (225) and said second flute (223).

## Patentansprüche

1. Verfahren zur Herstellung einer selbstbohrenden Schraube (2), das Folgendes umfasst:
(a) Schmieden eines stangenförmigen Rohlings (20) zum Bilden eines Kopfteils (21), eines Bohrteils (22) gegenüber dem Kopfteil (21) und eines Schaftteils (24) zwischen dem Kopfteil (21) und dem Bohrteil (22), wobei der Bohrteil (22) zwei Nuten (222'), die jeweils auf zwei gegenüberliegenden Seiten des Bohrteils (22) ausgebildet sind, und zwei Stege (220'), die jeweils zwischen den Nuten (222') ausgebildet sind, aufweist;
(b) Verdrehen des Bohrteils (22) durch Festklemmen des Schaftteils (24) und eines Endabschnitts des Bohrteils (22) und durch Drehen des Schaftteils (24) und des Endabschnitts bezüglich einander, so dass die Nuten (222') und die Stege (220') so verdreht werden, dass sie sich schraubenförmig erstrecken; und
(c) Ausbilden eines ein Außengewinde aufweisenden Abschnitts (23) am Schaftteil (24) des Rohlings (20),
**dadurch gekennzeichnet, dass** in Schritt (b) der Schaftteil (24) und der Endabschnitt um einen Winkel von im Wesentlichen 180 Grad bezüglich einander gedreht werden.

2. Verfahren nach Anspruch 1, das weiterhin den Schritt der Wärmebehandlung des Rohlings (20) nach Schritt (c) umfasst.

3. Selbstbohrende Schraube (2), die Folgendes umfasst:
- einen Kopfteil (21);
- einen Schaftteil (24) mit einem ein Außengewinde aufweisenden Abschnitt (23); und
- einen Bohrteil (22) gegenüber dem Kopfteil (21), wobei der Bohrteil (22) einen Hauptabschnitt (22a) und einen Spitzenabschnitt (22b); zwei erste Nuten (222), die sich schraubenförmig durch den Haupt- und den Spitzenabschnitt (22a, 22b) erstrecken, und zwei Stege (220), die sich schraubenförmig zwischen den ersten Nuten (222) erstrecken, aufweist, wobei jeder der Stege (220) eine sich verjüngende Fläche (221), die sich in dem Spitzenabschnitt (22b) und zwischen den ersten Nuten (222) erstreckt, und eine Bohrschneide (224), die an einem Ende der sich verjüngenden Fläche (221) ausgebildet ist, aufweist,
**dadurch gekennzeichnet, dass** sich jede der ersten Nuten (222) um einen Winkel von ungefähr 180 Grad schraubenförmig windet.

4. Selbstbohrende Schraube (2) nach Anspruch 3, wobei jeder der Stege (220) weiterhin eine Stegfläche (2203) enthält, die sich schraubenförmig in dem Hauptabschnitt (22a) zwischen den ersten Nuten (222) erstreckt, und ein erstes Ende (2201), das sich neben einer der ersten Nuten (222) befindet, und ein zweites Ende (2202), das winkelförmig von dem ersten Ende (2201) beabstandet ist und sich neben der anderen der ersten Nuten (222) befindet, aufweist, wobei die Stegfläche (2203) ausgespart ist, um eine zweite Nut (223), die sich in der Nähe des ersten Endes (2201) schraubenförmig erstreckt, und eine Lippe (225), die schraubenförmig zwischen der zweiten Nut (223) und einer der ersten Nuten (222) vorragt, zu bilden, wobei sich die Lippe (225) unmittelbar neben der zweiten Nut (223) befindet, wobei die Stegfläche (2203) zwischen der Lippe (225) und der zweiten Nut (223) abgestuft ist.

## Revendications

1. Procédé de fabrication d'une vis auto-perceuse (2), comprenant les étapes suivantes:
(a) forger une ébauche en forme de barre (20) de manière à former une partie de tête (21), une partie de perçage (22) opposée à la partie de tête (21), et une partie de tige (24) entre la partie de tête (21) et la partie de perçage (22), la partie de perçage (22) comportant deux cannelures (222') formées respectivement sur deux côtés opposés de la partie de perçage (22), et deux plats (220') formés chacun entre les cannelures (222');
(b) tordre la partie de perçage (22) en serrant la partie de tige (24) et une section d'extrémité de la partie de perçage (22), et en faisant tourner la partie de tige (24) et la section d'extrémité l'une par rapport à l'autre, de telle sorte que les cannelures (222') et les plats (220') sont tordus de manière à s'étendre de façon hélicoïdale; et
(c) former une section filetée extérieurement (23) sur la partie de tige (24) de l'ébauche (20),
**caractérisé en ce que**, à l'étape (b), la partie de tige (24) et la section d'extrémité sont tournées l'une par rapport à l'autre d'un angle qui est sensiblement égal à 180 degrés.

2. Procédé selon la revendication 1, comprenant en outre le traitement thermique de l'ébauche (20) après l'étape (c).

3. Vis auto-perceuse (2), comprenant:
- une partie de tête (21);
- une partie de tige (24) qui présente une section filetée extérieurement (23); et
- une partie de perçage (22) opposée à ladite partie de tête (21), ladite partie de perçage (22) présentant une section principale (22a) et une section de pointe (22b), deux premières cannelures (222) qui s'étendent de façon hélicoïdale à travers lesdites sections principale et de pointe (22a, 22b), et deux plats (220) qui s'étendent de façon hélicoïdale entre lesdites premières cannelures (222), chacun desdits plats (220) présentant une face amincie (221) qui s'étend dans ladite section de pointe (22b) et entre lesdites premières cannelures (222), et un bord de perçage (224) qui est formé sur une extrémité de ladite face amincie (221),
**caractérisée en ce que** chacune desdites premières cannelures (222) tourne de façon hélicoïdale d'un angle qui est approximativement égal à 180 degrés.

4. Vis auto-perceuse (2) selon la revendication 3, dans laquelle chacun desdits plats (220) comprend en outre une face de plat (2203) qui s'étend de façon hélicoïdale dans ladite section principale (22a) entre lesdites premières cannelures (222) et qui présente une première extrémité (2201) qui est adjacente à l'une desdites premières cannelures (222), et une deuxième extrémité (2202) qui est espacée de façon angulaire de ladite première extrémité (2201) et qui est adjacente à l'autre desdites premières cannelures (222), ladite face de plat (2203) étant évidée de manière à former une deuxième cannelure (223) qui s'étend de façon hélicoïdale à proximité de ladite première extrémité (2201), et une lèvre (225) qui fait saillie de façon hélicoïdale entre ladite deuxième cannelure (223) et l'une desdites premières cannelures (222), ladite lèvre (225) étant immédiatement adjacente à ladite deuxième cannelure (223), ladite face de plat (2203) étant étagée entre ladite lèvre (225) et ladite deuxième cannelure (223).
